# EUROPEAN PATENT SPECIFICATION

(11) **EP 0 908 088 B1**
(45) Date of publication and mention of the grant of the patent: **02.01.2003**
(21) Application number: 98203048.8
(22) Date of filing: 11.09.1998
(51) Int. Cl.: A01D 75/28, A01D 89/00

(54) **Lateral float apparatus for windrow pick-up attachment**
Neigungseinrichtung für eine pendelnd gelagerte Schwadaufnehmer
Appareil de montage flottant pour un ramasseur

(30) Priority: 16.09.1997 US 59067 P
(43) Date of publication of application: 14.04.1999
(73) Proprietor: CNH Belgium N.V., 8210 Zedelgem (BE)
(72) Inventor: McClure, John R., New Holland, PA 17557 (US); Waldrop, William T., New Holland, PA 17557 (US)
(74) Representative: Vandenbroucke, Alberic

(56) References cited:
- DE-A- 4 214 466
- US-A- 4 266 395

## Description

The present invention relates generally to crop gathering attachments for agricultural harvesting machines and more particularly to lateral float apparatus for a windrow pick-up attachment for crop processing equipment such as forage harvesters.

The well known agricultural practice of forage harvesting consists of cutting either green or mature crop material into discrete particles, and conveying the particles from the field to a storage facility, such as a silo. While in storage the crop material undergoes an acid fermentation to give the particles an agreeable flavor and to prevent spoilage. This overall operation, which is commonly referred to as an ensilage process, converts standing crop in the field to livestock feed, generally called silage.

An essential piece of farm machinery used for producing silage is the forage harvester which is adapted to gather standing or windrowed crop material from the field, chop it into small particles and then convey the cut crop material to a temporary storage receptacle, such as a wagon. Harvesters of this type are either self propelled or pulled by a tractor. Typically, forage harvesters comprise a base unit having a rotary cutter having a generally cylindrical configuration with knives peripherally mounted to cooperate with a stationary shear bar for cutting material by a shearing action as it is passed across the surface of the bar. The chopped crop material is then discharged from the harvester through a spout which directs the flow of crop material to a wagon towed behind or along side the harvester. US-A-4,223,846 shows a self propelled forage harvester that has a general configuration that is typical of prior art base units.

Forage harvesters, regardless of the type, i.e., both self propelled or pull type, have a crop gathering attachment that initially encounters crop material, as the harvester moves across the field. As mentioned above, the crop being harvested is either standing, such as row crops, or windrowed. In the case of windrowed crop, a pick-up attachment, extending from the front of the harvester, typically includes a reel consisting of a plurality of fingers, each of which is moveable through a predetermined path for engaging and picking up the windrowed crop material from the ground. The fingers urge the crop material rearwardly over side-by-side stripper plates that define slots through which the fingers extend. The stripper plates terminate in the general vicinity of a transverse auger that consolidates the crop material and feeds it through a rear opening in the header to the base unit of the harvester for processing. A typical forage harvester windrow pick-up attachment is shown in US-A-4,495,756.

Prior art pick-up attachments have been either rigidly attached to the base unit or have been pivotally mounted to allow lateral floating action. Lateral floating has an increasingly greater importance as attachments with increasing widths become more prevalent, because the wider attachments are more susceptible to changes in the ground contour. A change in such contour could result in one end of a rigidly mounted pick-up being raised above the windrow material in the field over which it is being operated. This causes the crop to be bypassed, leading to inefficient operation. A header provided with the capability to laterally float, and thereby follow the ground contour, enables the header to be more effective over a wider area, resulting in improved operation by reducing losses. An example of a prior art forage harvester attachment with lateral float capabilities are the models 3060 and 4170, manufactured by IDASS (France), at least since 1994. A grain header and combine harvester combination having similar lateral float capabilities is shown in US-A-4,266,395.

According to the invention, there is provided a pick-up attachment for a harvesting machine having an input opening for receiving crop material collected by said attachment from a field, said attachment comprising:
a main frame;
means mounted on said main frame for collecting crop material from a field and conveying said collected crop material to said input opening);
an intermediate member for positioning said attachment on said harvesting machine, adjacent said input opening; and
means for pivotally mounting said intermediate member to said collecting and conveying means for rotation of said collecting and conveying means about a pivot axis extending in a generally for and aft direction to permit the position of said collecting and conveying means to change from a home position under conditions where the field is substantial level to left or right tilt positions in response to the contour of the field;
characterized in that said attachment further comprises means for dampening said rotation.

The dampening means relieve the tendency of the attachment to twist when uneven loading is caused by operating conditions. They assist in maintaining a smooth path of rotation with enhanced durability and serviceability.

According to a preferred embodiment the dampening means comprise at least one substantially vertically disposed plate and cooperating means for frictional engagement therewith. Advantageously the cooperating means comprise a pair of opposing pads mounted to receive the plate. The use of opposing pads improves the reliability and durability of the dampening means.

For locking the attachment in position, latch means may be provided for preventing the rotation thereof during transport. The latch means may comprise a spring loaded latch pin for engagement of an aperture in a bracket attached to the intermediate member.

A windrow pick-up attachment in accordance with the present invention will now be described in further detail, with reference to the following drawings, in which:
Figure 1 is a exploded plan view showing an improved windrow pick-up attachment for a forage harvester in which the preferred embodiment of the present invention is shown with the intermediate frame assembly separated form the pick-up;
Figure 2 is a is a cross sectional view taken in the direction of arrows 2-2 in Figure 1;
Figure 3 is a plan view showing the intermediate frame assembly of the present invention attached to the front end of a forage harvester;
Figure 4 is a cross sectional view taken in the direction of arrows 4-4 in Figure 3;
Figure 5 is plan view showing the intermediate frame assembly of the present invention coupled to the windrow pick-up attachment;
Figure 6 is a cross sectional view taken in the direction of arrows 6-6 in Figure 5;
Figure 7 is a plan view showing the intermediate frame assembly of the present invention attached to the front end of a forage harvester and coupled to the windrow attachment;
Figure 8 is a cross sectional view taken in the direction of arrows 8-8 in Figure 7; and
Figure 9 is a cross sectional view taken in the direction of arrows 9-9 in Figure 5.

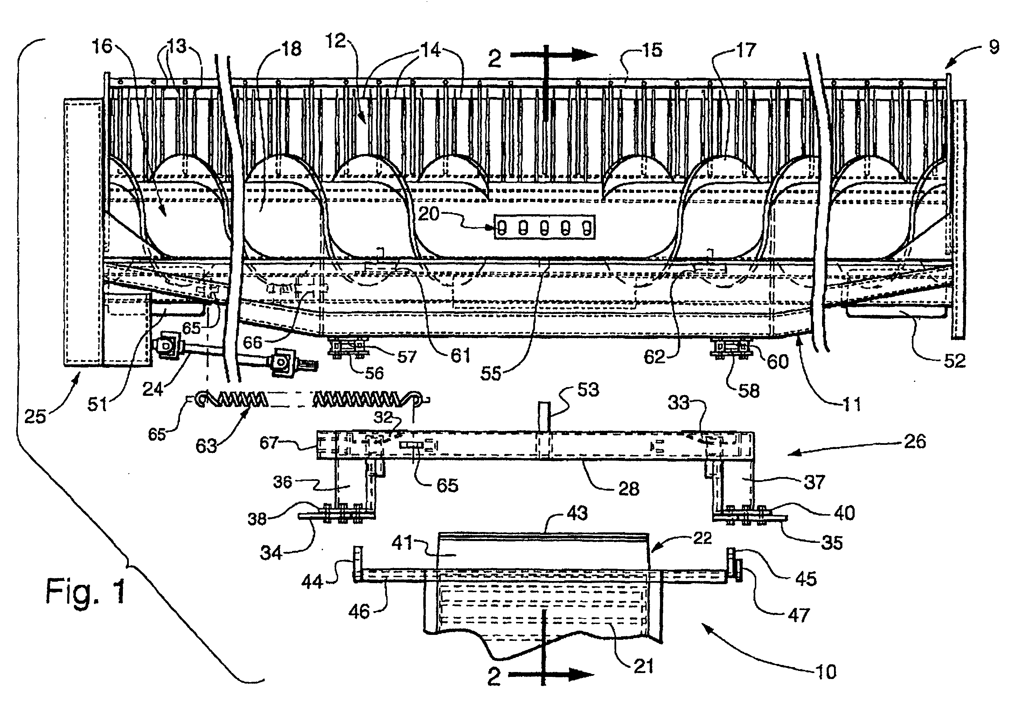

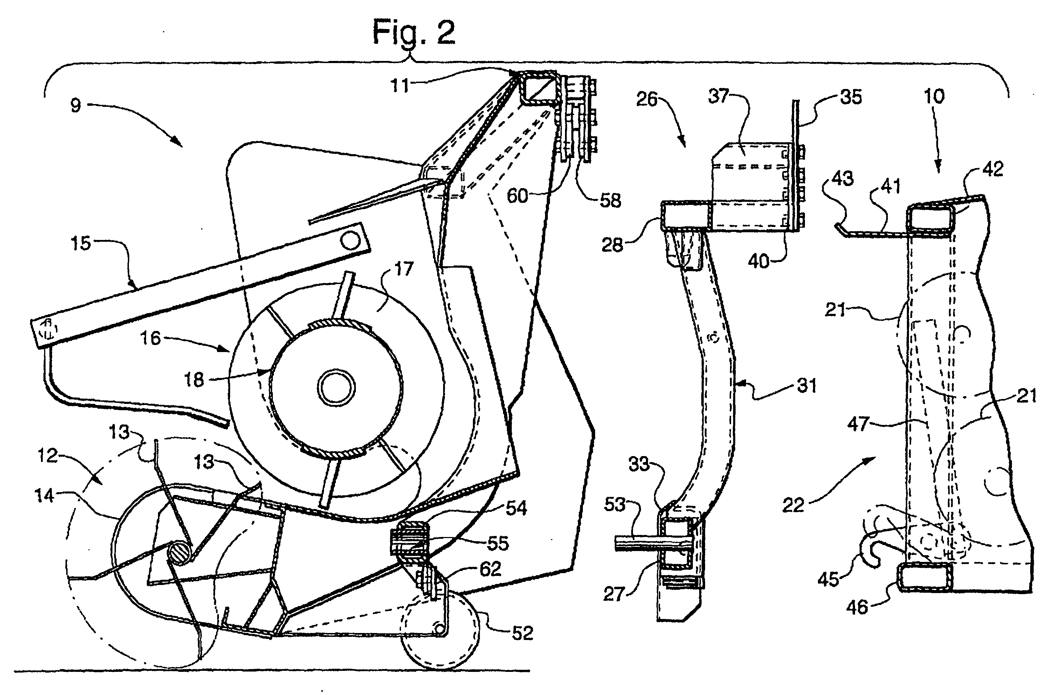

Referring now to the drawings for a more detailed description of one embodiment of the present invention, Figures 1 and 2 show a windrow pick-up attachment 9 mounted on the front end of a forage harvester, a portion of which is generally designated by reference numeral 10. The attachment comprises a frame 11, a pick-up reel 12, mounted on the frame 2, with conventional rotatable tines 13 operatively extending between stripper plates 14 for lifting windrowed crop material from the ground and urging it rearwardly over stripper plates 14 in a manner well known in the art. A wind guard 15 for restricting upward movement of the crop is pivotally mounted forward of an auger 16 also mounted on frame 11. The auger comprises flighting 17 extending from tube 18, and centrally located retractable fingers 20. Auger 16 is operable to convey crop through a central opening in the rear wall of attachment 9 towards feed rolls 21 mounted in the vicinity of the input opening 22 of the base unit of forage harvester 10. The feed rolls 21 receive the crop material conveyed through opening 22 and feed it to a rotating cutter assembly (not shown) in the base unit for processing in a conventional manner. Drive to reel 12 and auger 16 is accomplished via PTO 24 and conventional drive elements enclosed in housing 25.

It should be noted that flighting 17 of auger 16 comprises oppositely wound sections at the ends of tube 18 for consolidating the gathered crop material at a central region of auger 16 under conditions where auger 16 is being rotated. Retractable fingers 20 disposed at the central region of auger 16 are operable to project into the gathered crop and propel it rearwardly towards opening 22 whereupon feed rolls 21 in the harvester base unit engage the crop and continue to convey it rearwardly as mentioned above.

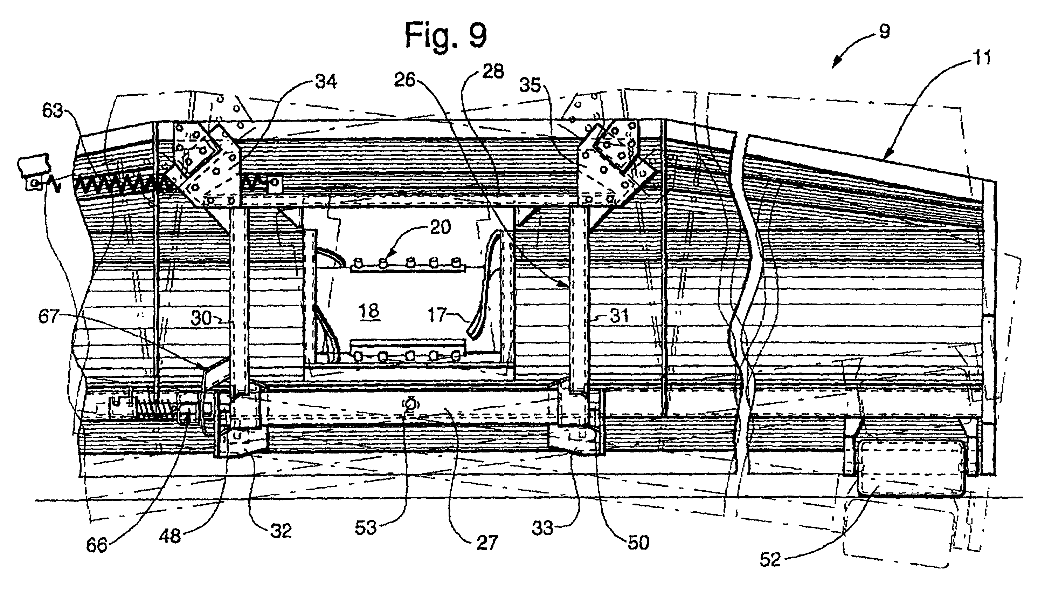

Also shown in Figures 1 and 2 is intermediate frame assembly 26, comprising a transverse lower cross beam 27, a transverse upper cross beam 28, and vertical side beams 30, 31 formed into a generally rectangular configuration around the periphery of the opening in the rear wall of pick-up attachment 9. This relationship of intermediate frame assembly 26 and the opening is clearly depicted in Figure 9 wherein assembly 26 is shown attached at the rear of pick-up attachment 9 in its normal operative position. Lower plates 32, 33 extend downwardly from lower cross beam 27, and upper plates 34, 35 extend upwardly from upper cross beam 28. The upper plates are affixed via intermediate mounting brackets 36, 37, having an integral flange 38, 40 to which the plates are attached.

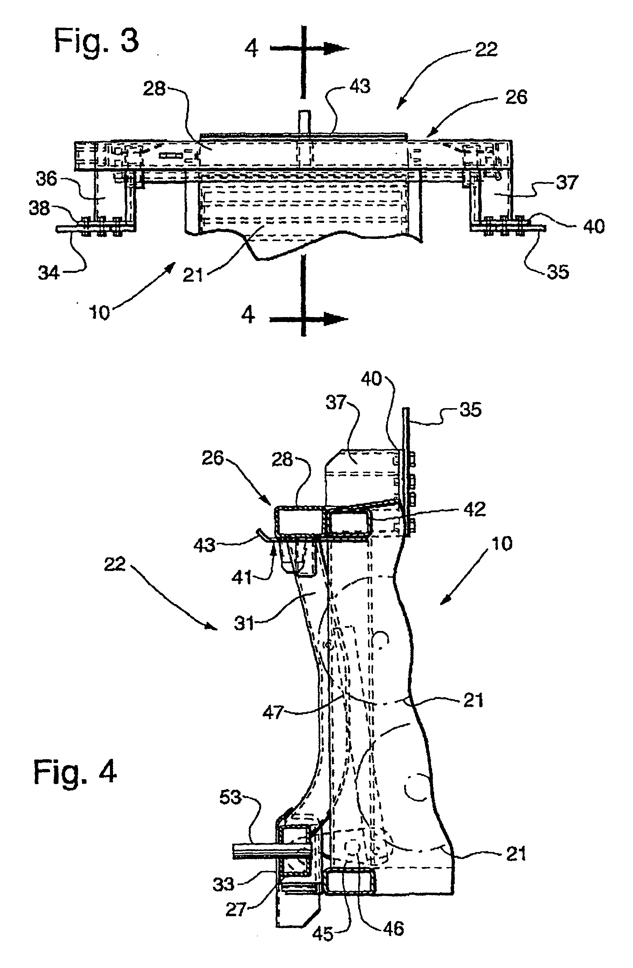

Now turning to Figures 3 and 4, mounting bracket 41 extends from forage harvester cross beam 42 into the opening of intermediate assembly 26 for supporting upper cross beam 28 which nests within the upturned end flange portion 43 of bracket 41. Simultaneously, mounting hooks 44, 45 are pivoted via shaft 46 and pivot handle 47 to the phantom outline position (see Figure 2) to engage coupling pins 48, 50 (see Figure 9) on intermediate assembly 26.

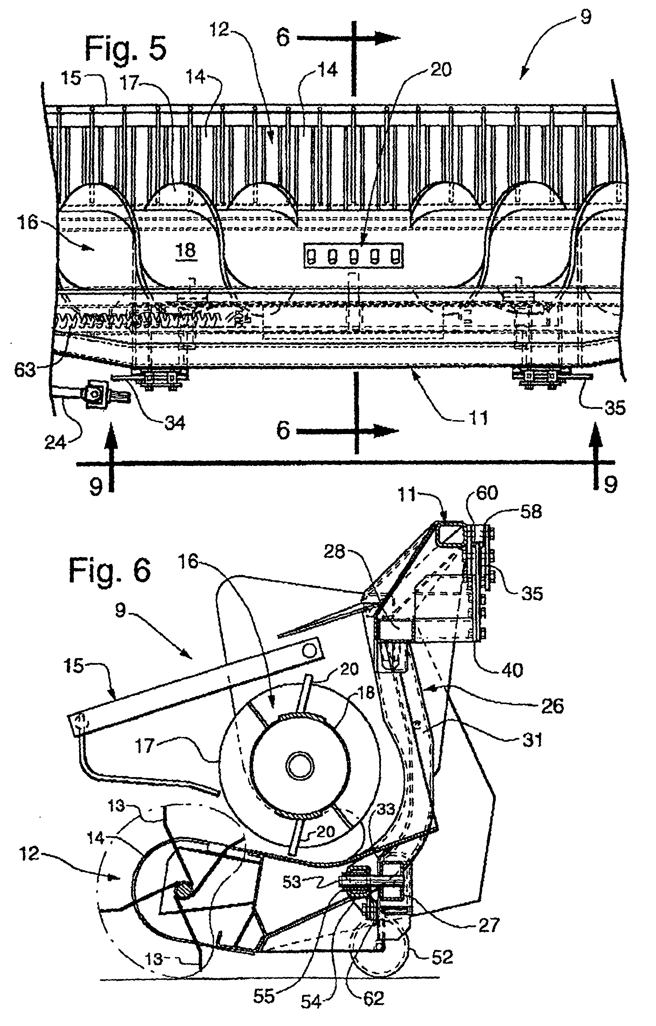

Referring now to Figures 5 and 6, pick-up attachment 9, supported on the ground by rollers 51, 52, is mounted on intermediate frame assembly 26 via pivot shaft 53 extending from lower crossbeam 27. Pivot shaft 53 is rotatably mounted in lower frame member 54 of frame 11 via cylindrical pivot shaft retainer 55, which pivotally receives pivot shaft 53. Two pairs of wear pads 56, 57 and 58, 60 are mounted on pick-up frame cross beam to receive plates 34, 35, respectively. A lower pair of wear pads 61, 62 are mounted on lower frame member 54 for operative engagement with lower plates 32, 33, respectively.

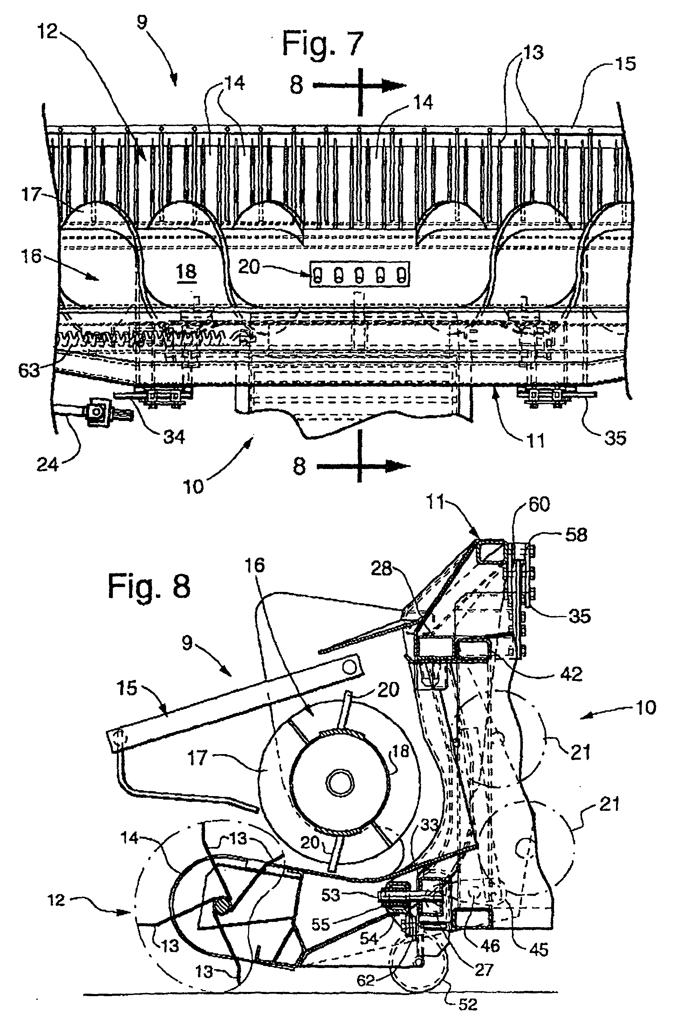

Under conditions where attachment 9 is attached to forage harvester 10 via intermediate assembly 26, as shown in Figures 7 and 8, contact between the frame of pick-up attachment and intermediate frame assembly 26 is constrained by friction between the pads and plates to dampen motion caused by rotation of the pick-up attachment 9, as it responds to variations in the contour of the terrain over which it is being operated. Rotation about pivot shaft 53 permits tines 13 to reach a point approximately 30 cm beneath the normal surface of the ground, as illustrated in Figure 9 by the phantom outline of the various elements of the attachment. Thus, when a recess in the surface of the ground is encountered by one of the rollers the attachment pivots laterally under the constraints of pads 56-58, 60-62 to permit the tines 13 to operate in the recess, after which the pick-up attachment is returned to its normal transverse level position by ground contact and/or leveling spring 63, secured between mounting tabs 64, 65 on the pick-up frame 11 and the upper cross beam 28 of intermediate frame assembly 26. By virtue of the close proximity of pivot shaft 53 to opening 22, crop feed to the feed rolls is not adversely affected under lateral pivoting motion of the attachment. A spring loaded latch pin 66 (see Figure 9) engages an aperture in bracket 67 to prevent pivoting and thereby hold attachment 9 in its level position during transport.

Of the many implicit and explicit advantages of the present invention, one considered to be very important is the manner in which the tendency of the header to twist is relieved by the lateral positioning of the pads and plate groups. Another equally as important advantage is the simplicity with which coupling is accomplished between the base unit and intermediate frame assembly 26 without sacrificing structural integrity.

While the preferred structure in which the principles of the present invention have been incorporated is shown and described above, it is to be understood that the invention is not to be limited to the particular details, as shown and described above, but that, in fact, widely different means may be employed in the practice of the broader aspects of the invention. For example a pick-up attachment according to the invention may also be used in combination with other harvesting equipment such as windrowers. The movement of frame 11 to the intermediate frame assembly 26 may also be dampened by other means such as a shock absorber mounted between these components, in parallel relationship to the spring 63. It is also conceivable to mount the plates 32-35 on the main frame 11 and to have wear pads 56-60 attached to the intermediate frame assembly 26.

## Claims

1. A pick-up attachment (9) for a harvesting machine (10) having an input opening (22) for receiving crop material collected by said attachment (9) from a field, said attachment comprising:
a main frame (11);
means (12, 16) mounted on said main frame (11) for collecting crop material from a field and conveying said collected crop material to said input opening (22) ;
an intermediate member (26) for positioning said attachment (9) on said harvesting machine (10), adjacent said input opening (22); and
means (53, 55) for pivotally mounting said intermediate member (26) to said collecting and conveying means (12, 16) for rotation of said collecting and conveying means (12, 16) about a pivot axis extending in a generally for and aft direction to permit the position of said collecting and conveying means (12, 16) to change from a home position under conditions where the field is substantial level to left or right tilt positions in response to the contour of the field;
**characterized in that** said attachment (9) further comprises means (32-35, 56-62) for dampening said rotation.

2. A pick-up attachment according to claim 1, **characterized in that** said means for dampening (32-35, 56-62) comprise:
at least one, substantially vertically disposed plate (32/33/34/35) mounted on said intermediate member (26) or on said main frame (2); and
cooperating means (61/62/56, 57/58, 60) mounted on said main frame (2) or on said intermediate member (26), respectively, for frictional engagement with said at least one plate (32/33/34/35).

3. A pick-up attachment according to claim 2, **characterized in that** said cooperating means comprise a pair of opposing pads (56, 57/58, 60) mounted to receive said plate (34/35).

4. A pick-up attachment according to claim 2 or 3, **characterized in that**:
said means (53, 55) for pivotally mounting said intermediate member (26) comprise a pivot assembly (53, 55) having a centrally located pivot means (53) extending from said intermediate member (26); and
said means for dampening (32-35,56-62) comprise a pair of plates (32-33/34-35) mounted equidistant from said pivot axis.

5. A pick-up attachment according to any of the preceding claims, **characterized in that** it further comprises:
means (63) for automatically returning said main frame (11) to said home position from said left or right tilt positions.

6. A pick-up attachment according to claim 5, **characterized in that** said means for returning comprise resilient structure (63) mounted between said main frame (11) and said intermediate member (26).

7. A pick-up attachment according to any of the preceding claims, **characterized in that** said means (53, 55) for pivotally mounting comprise a pivot assembly (53, 55) mounted for extending below said input opening (22) when said attachment (9) is mounted to said harvesting machine (10).

8. A pick-up attachment according to any of the preceding claims, **characterized in that** said means (12, 16) for collecting and conveying comprise:
a transverse reel assembly (12) including a series of tines (13) projecting outwardly from a series of stripper plates (14) for engaging crop material on the field and urging it upwardly and rearwardly; and
a conveyor comprising an auger (16) located rearwardly of said reel assembly (12) for consolidating crop material under conditions where it is urged rearwardly by said reel assembly (12),
said conveyor comprising means (17, 20) for feeding said consolidated crop material to said harvesting machine (10) via said input opening (22).

9. A pick-up attachment according to any of the preceding claims, **characterized in that** it further comprises:
latch means (66, 67) for preventing said rotation or holding said attachment (9) in its level position during transport.

10. A pick-up attachment according to claim 9, **characterized in that** said latch means comprise a spring loaded latch pin (66) for engagement of an aperture in a bracket (67) attached to said intermediate member (26).

## Patentansprüche

1. Aufnahme-Anbaugerät (9) für eine Erntemaschine (10), die eine Einlaßöffnung (22) zur Aufnahme von Erntematerial aufweist, das von dem Anbaugerät (9) von einem Feld aufgesammelt wird, wobei das Anbaugerät folgendes umfaßt:
einen Hauptrahmen (11);
auf dem Hauptrahmen (11) befestigte Einrichtungen (12, 16) zum Sammeln von Erntematerial von einem Feld und zum Fördern des gesammelten Erntematerials zu der Einlaßöffnung (22);
ein Zwischenbauteil (26) zur Positionierung des Anbaugerätes (9) auf der Erntemaschine (10) benachbart zu der Einlaßöffnung (22); und
Einrichtungen (53,55) zum schwenkbaren Befestigen des Zwischenbauteils (26) an den Sammel- und Fördereinrichtungen (12,16) für eine Drehung der Sammel- und Fördereinrichtung (12, 16) um eine Schwenkachse, die sich allgemein in Längsrichtung erstreckt, um eine Änderung der Position der Sammelund Fördereinrichtungen (12, 16) ausgehend von einer Ruhestellung unter Bedingungen, bei denen das Feld im wesentlichen eben ist, auf linke oder rechte Neigungsstellungen in Abhängigkeit von der Kontur des Feldes zu ermöglichen;
**dadurch gekennzeichnet, daß** das Anbaugerät (9) weiterhin Einrichtungen (32-35, 56-62) zur Dämpfung der Drehung umfaßt.

2. Aufnahme-Anbaugerät nach Anspruch 1, **dadurch gekennzeichnet, daß** die Dämpfungseinrichtungen (32-35, 56-62) folgendes umfassen:
zumindest eine im wesentlichen vertikal angeordnete Platte (32/33/34/35), die auf dem Zwischenbauteil (26) oder auf dem Hauptrahmen (2) befestigt ist; und
damit zusammenwirkende Einrichtungen (61/62/56, 57/58, 60), die auf dem Hauptrahmen (2) bzw. auf dem Zwischenbauteil (26) einen Reibeingriff mit der zumindest einen Platte (32/33/34/35) befestigt sind.

3. Aufnahme-Anbaugerät nach Anspruch 2, **dadurch gekennzeichnet, daß** die zusammenwirkenden Einrichtungen ein Paar von gegenüberliegenden Klötzen (56, 57/58, 60) aufweisen, die zur Aufnahme der Platte (34/35) befestigt sind.

4. Aufnahme-Anbaugerät nach Anspruch 2 oder 3, **dadurch gekennzeichnet, daß**:
die Einrichtungen (53, 55) zur schwenkbaren Befestigung des Zwischenbauteils (26) eine Schwenkbaugruppe (53, 55) umfassen, die eine in der Mitte angeordnete Schwenkeinrichtung (53) aufweist, die sich von dem Zwischenbauteil (26) erstreckt; und
die Einrichtungen zur Dämpfung (32-35, 56-62) ein Paar von Platten (32-33/34-35) umfassen, die unter gleichen Abständen von der Schwenkachse befestigt sind.

5. Aufnahme-Anbaugerät nach einem der vorhergehenden Ansprüche, **dadurch gekennzeichnet, daß** es weiterhin folgendes umfaßt:
Einrichtungen (63) zur automatischen Rückführung des Hauptrahmens (11) von den linken oder rechten Neigungsstellungen auf die Ruhestellung.

6. Aufnahme-Anbaugerät nach Anspruch 5, **dadurch gekennzeichnet, daß** die Einrichtungen zur Rückführung eine elastische Struktur (63) umfassen, die zwischen dem Hauptrahmen (11) und dem Zwischenbauteil (26) befestigt ist.

7. Aufnahme-Anbaugerät nach einem der vorhergehenden Ansprüche, **dadurch gekennzeichnet, daß** die Einrichtungen (53, 55) zur schwenkbaren Befestigung eine Schwenkbaugruppe (53, 55) umfassen, die so befestigt ist, daß sie sich unterhalb der Einlaßöffnung (22) erstreckt, wenn das Anbaugerät (9) an der Erntemaschine (10) befestigt ist.

8. Aufnahme-Anbaugerät nach einem der vorhergehenden Ansprüche, **dadurch gekennzeichnet, daß** die Einrichtungen (12, 16) zum Sammeln und Fördern folgendes umfassen:
eine sich in Querrichtung erstreckende Haspelbaugruppe (12), die eine Serie von Zinken (13) einschließt, die sich von einer Serie von Abstreifplatten (14) nach außen erstrecken, um mit Emtematerial auf dem Feld in Eingriff zu kommen und dieses nach oben und nach hinten zu drücken; und
einen Förderer, der eine Förderschnecke (16) umfaßt, die hinter der Haspelbaugruppe (12) angeordnet ist, um Erntematerial unter Bedingungen zu verdichten, unter denen es durch die Haspelbaugruppe (12) nach hinten gedrückt wird,
wobei der Förderer Einrichtungen (17, 20) zur Zuführung des verdichteten Emtematerials über die Einlaßöffnung (22) an die Erntemaschine (10) umfaßt.

9. Aufnahme-Anbaugerät nach einem der vorhergehenden Ansprüche, **dadurch gekennzeichnet, daß** es weiterhin folgendes umfaßt:
Verriegelungseinrichtungen (66, 67) zur Verhinderung der Drehung oder zum Festhalten des Anbaugerätes (9) in seiner ebenen Stellung während des Transportes.

10. Aufnahme-Anbaugerät nach Anspruch 9, **dadurch gekennzeichnet, daß** die Verriegelungseinrichtungen einen federbelasteten Verriegelungsbolzen (66) zum Eingriff in einer Öffnung in einem Haltebügel (67) umfassen, der an dem Zwischenbauteil (26) befestigt ist.

## Revendications

1. Accessoire de ramassage (9) pour une ensileuse (10) possédant une ouverture d'introduction (22) destinée à recevoir du matériau de récolte collecté par ledit accessoire (9) hors d'un champ, ledit accessoire comprenant:
un châssis principal (11);
des moyens (12, 16) montés sur ledit châssis principal (11) pour collecter du matériau de récolte hors d'un champ et transporter ledit matériau de récolte collecté vers ladite ouverture d'introduction (22);
un membre intermédiaire (26) destiné à positionner ledit accessoire (9) sur ladite ensileuse (10), à proximité de ladite ouverture d'introduction (22); et
des moyens de montage (53, 55) avec pivotement dudit membre intermédiaire (26) auxdits moyens de collecte et de transport (12, 16) afin de mettre en rotation lesdits moyens de collecte (12, 16) et de transport autour d'un axe de pivotement s'étendant dans une direction généralement longitudinale pour permettre le changement de la position desdits moyens de collecte et de transport (12, 16) depuis une position de repos dans les situations où le champ est substantiellement horizontal, vers des positions inclinées à gauche ou à droite en réponse au contour du champ;
**caractérisé en ce que** ledit accessoire (9) comprend en outre des moyens (32-35, 56-62) d'amortissement de ladite rotation.

2. Accessoire de ramassage selon la revendication 1, **caractérisé en ce que** lesdits moyens d'amortissement (32-35, 56-62) comprennent:
une au moins unique plaque (32/33/34/35) disposée substantiellement verticalement et montée sur ledit membre intermédiaire (26) ou sur ledit châssis principal (11); et
des moyens associés (61/62/56, 57/58, 60) montés respectivement sur ledit châssis principal (11) ou sur ledit membre intermédiaire (26), afin de s'engager avec friction avec ladite au moins unique plaque (32/33/34/35).

3. Accessoire de ramassage selon la revendication 2, **caractérisé en ce que** lesdits moyens associés comprennent une paire de patins opposés (56, 57/58, 60) montés pour accueillir ladite plaque (34/35).

4. Accessoire de ramassage selon la revendication 2 ou 3, **caractérisé en ce que**:
lesdits moyens (53, 55) de montage pivotant dudit membre intermédiaire (26) comprennent un assemblage de pivotement (53, 55) possédant un moyen de pivot (53) en extension par rapport audit membre intermédiaire (26); et
lesdits moyens d'amortissement (32-35,56-62) comprennent une paire de plaques (32-33/34-35) montées à égale distance dudit axe de pivotement.

5. Accessoire de ramassage selon l'une quelconque des revendications précédentes, **caractérisé en ce qu'**il comprend en outre:
des moyens (63) de retour automatique dudit châssis principal (11) depuis lesdites positions d'inclinaison à gauche ou à droite vers ladite position de repos.

6. Accessoire de ramassage selon la revendication 5, **caractérisé en ce que** lesdits moyens de retour comprennent une structure élastique (63) montée entre ledit châssis principal (11) et ledit membre intermédiaire (26).

7. Accessoire de ramassage selon l'une quelconque des revendications précédentes, **caractérisé en ce que** lesdits moyens (53, 55) de montage pivotant comprennent un assemblage de pivotement (53, 55) monté pour s'étendre sous ladite ouverture d'introduction (22) lorsque ledit accessoire (9) est monté à ladite récolteuse (10).

8. Accessoire de ramassage selon l'une quelconque des revendications précédentes, **caractérisé en ce que** lesdits moyens (12, 16) de collecte et de transport comprennent:
un assemblage de tambour transversal (12) comprenant une série de dents (13) en saillie vers l'extérieur à partir d'une série de plaques de dégagement (14) afin d'engager le matériau de récolte sur le champ et de le contraindre vers le haut et vers l'arrière; et
un convoyeur comprenant une vis (16) située à l'arrière dudit assemblage de tambour (12) pour consolider le matériau de récolte dans la situation où il est contraint vers l'arrière par ledit assemblage de tambour (12),
ledit convoyeur comprenant des moyens (17, 20) d'alimentation dudit matériau de récolte consolidé vers ladite récolteuse (10) via ladite ouverture d'introduction (22).

9. Accessoire de ramassage selon l'une quelconque des revendications précédentes, **caractérisé en ce qu'**il comprend en outre:
un moyen de verrouillage (66, 67) pour éviter ladite rotation ou maintenir ledit accessoire dans sa position de niveau durant le transport.

10. Accessoire de ramassage selon la revendication 9, **caractérisé en ce que** ledit moyen de verrouillage comprend une broche de verrou (66) contrainte par un ressort afin d'engager une ouverture dans un support (67) attaché audit membre intermédiaire (26).
